# EUROPEAN PATENT APPLICATION

(11) **EP 1 607 294 A1**
(43) Date of publication of application: **21.12.2005**
(21) Application number: 04014333.1
(22) Date of filing: 18.06.2004
(51) Int. Cl.: B60S 1/50

(54) **Filler cap for under bonnet applications**

(71) Applicant: Ford Global Technologies, LLC, Dearborn, MI 48126 (US)
(72) Inventor: Myrberg, Anders, 436 40 Askim (SE); Nilsson, Dag, 411 28 Göteborg (SE); Nilsson, Marcus, 413 02 Göteborg (SE); Wikström, Mattias, 414 56 Göteborg (SE)
(74) Representative: Hammond, Andrew David

(57) **Abstract**

The present patent application relates to a filler cap for under bonnet applications in automotive vehicles. A first essentially cylindrical body part (1) at a first end (1a) comprises means for concentrically engaging a receptacle opening neck. A second body part (2) is pivotally attached to the first body part (1) at a second end (1b) thereof such that the pivot axis (3) intersects a longitudinal center axis (4) of the first cylindrical body part (1) at an essentially right angle. The second body part (2) is pivotal between a rest position, essentially aligned with a plane of the second end (1b) of the first body part (1) and an operating position, essentially orthogonal to the plane of the second end (1b) of the first body part (1). Hereby good ergonomic properties are provided to the filler cap while at the same time the height thereof can be minimized.

## Description

### Technical field

The present patent application relates to a filler cap and in particular a filler cap for under bonnet applications in automotive vehicles in accordance with the preamble of claim 1.

### Background of the invention

Motor vehicle manufacturers, for visibility, aerodynamic and styling reasons, usually design new motor cars where the bonnet line is kept as low as possible. As a result, there is generally very little clearance between the deformable and thereby energy absorbing bonnet and the usually more solid engine bay contents of the automotive vehicles, such as the engine, radiator and a variety of other liquid carrying receptacles and their associated filler caps etc. Several proposals have been made to increase the cushioning effect of the bonnet when impacted by a pedestrian during an accident through increasing the clearance between the bonnet and the underlying engine bay contents, however physical requirements of different under bonnet components sometimes impose restrictions therefore. Especially, when attempting to increase the clearance in vehicles of finalized design already being manufactured. E.g. with respect to filler caps for different liquid carrying receptacles, there is a physical requirement that the cap has good ergonomic properties, i.e. is easily gripped for removal and application thereof, e.g. through screwing and unscrewing. This usually result in a minimum height requirement for such filler caps, which often causes the caps to have little clearance to the above bonnet. Today's filler caps are usually very different from each other, both in shape and with respect to how a user should handle them. This makes them hard to package and quite often a lot of valuable packaging volume is used to fulfill the ergonomic requirements on the filler cap.

### Summary of the invention

One object of the invention is to provide an improved filler cap for under bonnet applications and in particular an improved filler cap for under bonnet applications in automotive vehicles providing for increased bonnet clearance and thus able to provide increased protection for any pedestrians being impacted while at the same time, using a minimized packaging volume, providing good ergonomic properties for a user wishing to remove or apply the filler cap.

This object is achieved in accordance with the characterizing portion of claim 1.

Thanks to the provision of a second body part being pivotally attached to a second end of a first essentially cylindrical body part, which at a first end comprises means for concentrically engaging a receptacle opening neck, the attachment being such that the pivot axis intersects a longitudinal center axis of the first cylindrical body part at an essentially right angle, and the second body part being pivotal between a rest position, essentially aligned with a plane of the second end of the first body part and an operating position, essentially orthogonal to the plane of the second end of the first body part, an improved filler cap for under bonnet applications in automotive vehicles providing for increased bonnet clearance and thus able to provide increased protection for any pedestrians being impacted while at the same time, using a minimized packaging volume, providing good ergonomic properties for a user wishing to remove or apply the filler cap is provided.

Preferred embodiments are listed in the dependent claims.

### Description of drawings

In the following, the invention will be described in greater detail with reference to attached drawings, in which

Fig. 1 is a schematic illustration of a filler cap in accordance with the present invention in a "rest" position,

Fig. 2 is a schematic illustration of the filler cap in accordance with the present invention in an "operating" position,

Fig. 3 illustrates schematically the filler cap in accordance with the present invention being operated for removal from or application to a receptacle opening neck.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

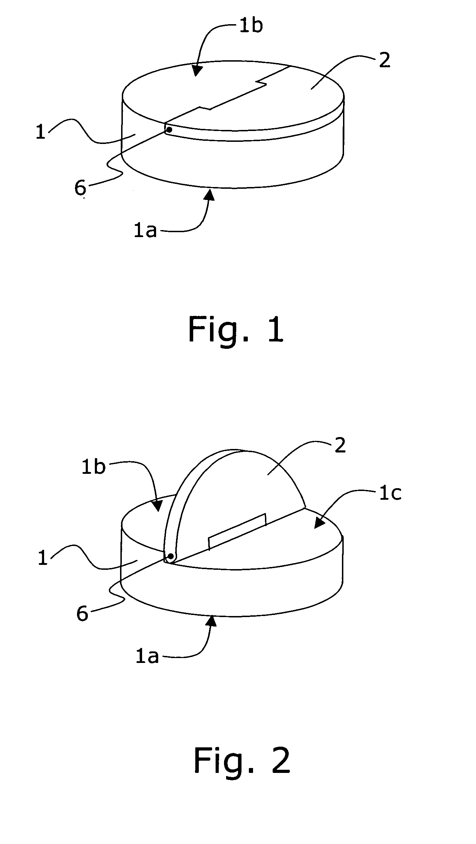

A simplified perspective view of the filler cap for under bonnet applications in automotive vehicles is shown in Fig. 1. The filler cap comprises a first essentially cylindrical body part 1. At a first end 1a the first essentially cylindrical body part 1 comprises means (not shown) for concentrically engaging a receptacle opening neck. A second body part 2 is pivotally attached to the first body part 1 at a second end 1b thereof.

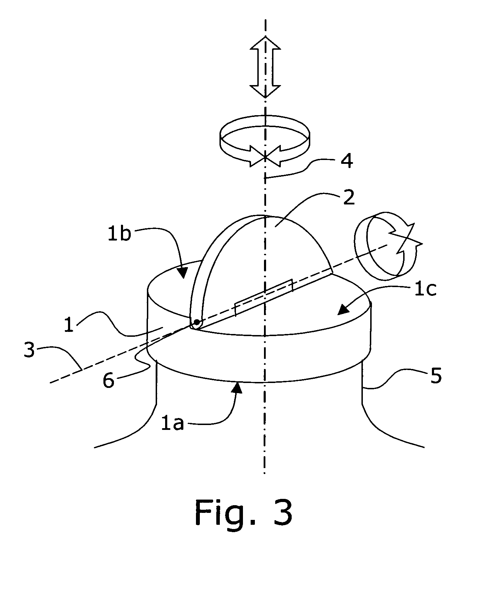

As illustrated in figure 3 the second body part 2 is pivotally attached to the first body part 1 such that the pivot axis 3 intersects a longitudinal center axis 4 of the first cylindrical body part 1 at an essentially right angle.

The second body part 2 is pivotal between a rest position, as illustrated in figure 1, in which it is essentially aligned with a plane of the second end 1b of the first body part 1 and an operating position, as illustrated in figure 2, in which it is essentially orthogonal to the plane of the second end 1b of the first body part 1. Hereby good ergonomic properties are provided to the filler cap while at the same time the height thereof can be minimized. A user may easily manipulate the second body part 2 and place it in its operating position, in which the second body part 2 provides a good grip for removal and application of the filler cap to the receptacle opening neck 5, e.g. through screwing and unscrewing.

In order to further minimize the height requirements of the filler cap the first body part 1 at the second end thereof 1b has a recessed area 1c of complementary shape to the second body part 2, which recessed area 1c further is arranged to receive the second body part 2 in its rest position, as illustrated in figure 1. Hereby the filler cap is rendered an essentially flat surface at the second end 1b of the first body part 1 when the second body part 2 is in its rest position.

In order to provide for a fluid tight filler cap the first essentially cylindrical body part 1 at the first end 1a thereof further comprises means (not shown) for sealing the receptacle opening upon engaging the receptacle opening neck 5. Through integrating both the means for concentrically engaging the receptacle opening neck 5 as well as the means for sealing the receptacle opening into the first body part 1, the height of the first body part 1, and thereby the filler cap, can be maintained at a minimum. Both the sealing means and the engaging means can be made as an additional body part (not shown), which is provided as an insert into the first body part 1. Hereby a large variety of different fittings and sealing arrangements can be catered for.

In one embodiment of the filler cap the means for concentrically engaging a receptacle opening neck 5 comprises threads (not shown), which threads are complementary to threads of the receptacle opening neck 5 to which the filler cap is intended to be applied.

In an alternative embodiment of the filler cap the means for concentrically engaging a receptacle opening neck 5 comprises a first half of a bayonet joint (not shown), which bayonet joint is complementary to a second half of a bayonet joint of the receptacle opening neck 5 to which the filler cap is intended to be applied.

In still an alternative embodiment of the filler cap the means for concentrically engaging a receptacle opening neck 5 comprises a first half of a snap-in joint (not shown), which snap-in joint is complementary to a second half of a snap-in joint of the receptacle opening neck 5 to which the filler cap is intended to be applied.

In order to provide a filler cap having good visual ergonomics the first body part 1 at a second end 1b thereof comprises an area designated for providing a user with graphical information, which e.g. can be printed to this area or applied thereto as a sticker. This area is preferably made up by the section of the second end 1b of the first body part 1 not providing the recessed area 1c. However, the recessed area 1c can be provided with such graphical information which is intended only to be visible when the second body part 2 is in its operating position (Fig. 2). Further, the visible surface area of the second body part 2, when in its rest position (Fig. 1), can be provided with additional graphical information. One could even envisage the side of the second body part 2, when in its rest position (Fig. 1), facing the recessed area 1c being provided with graphical information intended to be made visible upon the second body part 2 being brought to its operating position (Fig. 2). Finally, one could even envisage the circumferential surface of the essentially cylindrical body part 1 being provided with graphical information.

The second body part 2 is pivotally attached to the first body part 1 by means of at least one axle shaped member 6 providing a physical representation of the pivot axis 3.

With the aim to further increase the visual ergonomics of the filler cap the second body part 2 is shaped or color coded to provide differentiating information on the specific filler cap. This facilitates for a user to locate a correct filler cap corresponding to the current needs in an expedient manner.

In accordance with the present invention is also envisaged an automotive vehicle, which comprises a filler cap for under bonnet applications as described above. Hereby the vehicle is provided increased bonnet clearance and thus able to provide increased protection for any pedestrians being impacted while at the same time providing good ergonomic properties for a user wishing to remove or apply an under bonnet filler cap thereof.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A filler cap for under bonnet applications in automotive vehicles comprising:
a first essentially cylindrical body part (1) at a first end (1a) comprising means for concentrically engaging a receptacle opening neck (5);
**characterized in**;
a second body part (2) being pivotally attached to the first body part (1) at a second end (1b) thereof such that the pivot axis (3) intersects a longitudinal center axis (4) of the first cylindrical body part (1) at an essentially right angle, and;
the second body part (2) being pivotal between a rest position, essentially aligned with a plane of the second end (1b) of the first body part (1) and an operating position, essentially orthogonal to the plane of the second end (1b) of the first body part (1).

2. A filler cap for under bonnet applications in automotive vehicles according to claim 1,
**characterized in that** the first body part (1) at the second end (1b) thereof has a recessed area (1c) of complementary shape to the second body part (2) which further is arranged to receive the second body part (2) in its rest position.

3. A filler cap for under bonnet applications in automotive vehicles according to claim 1 or claim 2,
**characterized in that** the first essentially cylindrical body part (1) at the first (1a) end further comprises means for sealing the receptacle opening upon engaging the receptacle opening neck (5).

4. A filler cap for under bonnet applications for automotive vehicles according to any one of claims 1 to 3,
**characterized in that** the means for concentrically engaging a receptacle opening neck (5) comprises threads, complementary to threads of the receptacle opening neck (5).

5. A filler cap for under bonnet applications for automotive vehicles according to any one of claims 1 to 3,
**characterized in that** the means for concentrically engaging a receptacle opening neck (5) comprises a first half of a bayonet joint, complementary to a second half of a bayonet joint of the receptacle opening neck (5).

6. A filler cap for under bonnet applications for automotive vehicles according to any one of claims 1 to 3,
**characterized in that** the means for concentrically engaging a receptacle opening neck (5) comprises a first half of a snap-in joint, complementary to a second half of a snap-in joint of the receptacle opening neck (5).

7. A filler cap for under bonnet applications for automotive vehicles according to any one of the preceding claims,
**characterized in that** the first body part (1) at a second end (1b) thereof comprises an area designated for providing a user with graphical information.

8. A filler cap for under bonnet applications for automotive vehicles according to any one of the preceding claims,
**characterized in** the second body (2) part being pivotally attached to the first body part (1) by at least one axle shaped member (6).

9. A filler cap for under bonnet applications for automotive vehicles according to any one of the preceding claims,
**characterized in** the second body part (2) being shaped or color coded to provide differentiating information on the specific filler cap.

10. An automotive vehicle, **characterized in that** it comprises a filler cap for under bonnet applications according to any one of the preceding claims.
